Europäisches Patentamt

European Patent Office

Office européen des brevets

(19)

(11) Veröffentlichungsnummer: **0 419 993 A2**

## (12) EUROPÄISCHE PATENTANMELDUNG

(21) Anmeldenummer: 90117869.9

(22) Anmeldetag: 17.09.90

(51) Int. Cl.5: **G05F 1/59, G05F 1/613**

(30) Priorität: 28.09.89 DE 3932437

(43) Veröffentlichungstag der Anmeldung:
**03.04.91 Patentblatt 91/14**

(84) Benannte Vertragsstaaten:
**DE FR GB IT**

(71) Anmelder: **BICC-VERO ELECTRONICS GMBH
Carsten-Dressler-Strasse 10
W-2800 Bremen 61(DE)**

(72) Erfinder: **Bertram, Rolf, Dipl.-Ing.
Moorweg 43
W-2942 Jever(DE)**
Erfinder: **Oltmann, Klaus, Dipl.-Ing.
Hageler Höhe 1
W-2907 Grossenkneten(DE)**

(74) Vertreter: **Bohnenberger, Johannes, Dr. et al
Meissner, Bolte & Partner
Widenmayerstrasse 48 Postfach 86 06 24
W-8000 München 86(DE)**

### (54) Parallelschaltmodul.

(57) Bei der Parallelschaltung von Stromversorgungsschaltungen wird eine gleichmäßige Lastaufteilung auf die Stromversorgungsschaltungen angestrebt. Es wird vorgeschlagen, Meßeinrichtungen (9) vorzusehen, die derart ausgebildet und mit den Stromversorgungsschaltungen (SV) verschaltet sind, daß den Ausgangsströmen (IA) jeder Stromversorgungsschaltung entsprechende Meßsignale (UI) erzeugbar sind, daß eine Mittelwertsbildungseinrichtung (10) vorgesehen wird, der die Meßsignale zuführbar sind und die ein dem Mittelwert der Meßsignale entsprechendes Mittelwertssignal (UI) erzeugt, und daß Komparatoreinrichtungen (20) für jede Stromversorgungsschaltung vorgesehen sind, die das Mittelwertssignal mit den jeweiligen Meßsignalen vergleichen und ein dem jeweiligen Steuereingang (Se) einer Stromversorgungsschaltung zugeführtes Steuersignal derart erzeugen,daß die Ausgangsspannung (U) der jeweiligen Stromversorgungsschaltung (SV) dann angehoben bzw. abgesenkt wird, wenn der jeweilige Ausgangsstrom (IA) unter bzw. über dem Mittelwert der Ausgangsströme liegt.

FIG.1

# PARALLELSCHALTMODUL

Die Erfindung betrifft ein Parallelschaltmodul nach dem Oberbegriff des Patentanspruches 1, über das mehrere regelbare Stromversorgungsschaltungen zur Speisung eines einzigen Verbrauchers parallelschaltbar sind.

Es sind Stromversorgungseinheiten auf dem Markt, die primärseitig - als Netzgeräte - an das Wechselstrom-Versorgungsnetz oder - als DC/DC-Wandler- an eine Gleichstromquelle anschließbar sind und sekundärseitig eine Versorgungsspannung abgeben, deren Amplitude über einen "Sense"-Eingang regelbar ist. Naturgemäß haben derartige Stromversorgungsschaltungen eine begrenzte Strom-Belastbarkeit, bei deren Überschreitung die Ausgangsspannung abfällt. Wenn man nun ein schon vorhandenes elektronisches Gerät durch Hinzufügung von Baugruppen erweitert, so wird eine erhöhte Leistung der zur Versorgung vorgesehenen Stromversorgungsschaltung nötig. Oftmals möchte der Anwender die vorhandene Stromversorgungsschaltung nicht gegen eine leistungsfähigere austauschen sondern eine weitere Stromversorgungsschaltung parallel zur vorhandenen Stromversorgungsschaltung zur Deckung des erhöhten Leistungs- bzw. Strombedarfs einbauen und parallel zur vorhandenen Stromversorgungsschaltung schalten.

Ein weiteres noch wichtigeres Problem ergibt sich durch die Forderung nach einer Erhöhung der Systemsicherheit von Stromversorgungen, die insbesondere bei Sicherheitssystemen (Alarmanlagen), im militärischen Bereich oder in zunehmendem Maße in wartungsarmen Nachrichtensystemen bestehen. Hier werden redundante Systeme gefordert, bei welchen mehrere Stromversorgungseinheiten parallel betrieben werden und derartige Ausgangsleistungen aufweisen, daß dann, wenn eine (oder mehrere) der vorhandenen Stromversorgungsschaltungen ausfällt, die übrigen Stromversorgungsschaltungen unter jeweils erhöhter Leistungsabgabe die Versorgung des Verbrauchers sicherstellen. Im einfachsten Fall würde man also zwei Stromversorgungsschaltungen parallelschalten, die jeweils den Leistungsbedarf des Verbrauchers decken können. Wenn die vom Verbraucher entnommene Leistung gleichmäßig auf die beiden Stromversorgungsschaltungen verteilt ist, also beide Stromversorgungsschaltungen gleich große Ströme liefern, so entsteht in beiden Stromversorgungsschaltungen nur relativ wenig Wärme, so daß die Lebenserwartung der Bauteile in den Stromversorgungsschaltungen hoch ist. Wenn die Lastverteilung ungleichmäßig ist, so sinkt die Lebenserwartung der höher belasteten Stromversorgungsschaltung, wobei man bei Elektrolytkondensatoren bzw. Halbleitern mit einer Halbierung der Lebensdauer rechnen muß, wenn die Betriebstemperatur um 10 K bzw. 8 K steigt. Ein weiteres Problem ergibt sich bei ungleichmäßig belasteten Stromversorgungsschaltungen dann, wenn eine (im allgemeinen die höher belastete) Stromversorgungsschaltung ausfällt. In diesem Fall muß dann nämlich die bisher gering oder gar nicht belastete Stromversorgungsschaltung den vollen Laststrom liefern, was bei den üblichen geregelten Stromversorgungsschaltungen zu einem zeitweiligen Spannungsabfall führt. Dies wiederum kann zu einer Störung im Verbraucher führen.

Bisher geht man bei der Parallelschaltung von Stromversorgungsschaltungen so vor, daß man die Stromversorgungsschaltungen über Dioden und definierte Ausgangswiderstände an die gemeinsame Ausgangsklemme koppelt, so daß bei Ausfall einer Stromversorgungsschaltungen die übrigen Stromversorgungsschaltungen abgetrennt werden. Wenn die Ausgangswiderstände und die Dioden-Daten nicht exakt gleich bzw. die Ausgangsspannungen der Stromversorgungsschaltungen nicht exakt aufeinander angepaßt sind, ist eine ungleichmäßige Lastaufteilung unvermeidbar. Diese wiederum kann dazu führen, daß durch die Regelung der Stromversorgungsschaltungen eine (von zwei) Stromversorgungsschaltungen den gesamten in den Verbraucher fließenden Strom liefert, während die zweite Stromversorgungsschaltung keinen Strom liefert.

Der Erfindung liegt die Aufgabe zugrunde, ein Parallelschaltmodul der eingangs genannten Art dahingehend weiterzubilden, daß eine gleichmäßige Lastaufteilung auf im wesentlichen beliebig viele Stromversorgungsschaltungen erzielbar ist.

Diese Aufgabe wird durch die im Kennzeichen des Patentanspruches 1 angegebenen Merkmale gelöst.

Ein wesentlicher Punkt der Erfindung liegt darin, daß ein zum Mittelwert aus allen von den Stromversorgungsschaltungen gelieferten Strömen proportionaler Wert gebildet und dieser über einen Vergleich mit dem Ausgangsstrom der jeweiligen Stromversorgungsschaltung zu deren Regelung herangezogen wird. Dies bedeutet, daß dann, wenn eine Stromversorgungsschaltung ausfällt, der Mittelwert entsprechend steigt und demzufolge die funktionstüchtig verbleibenden Stromversorgungsschaltungen anteilig entsprechend höhere Ausgangsströme liefern.

Vorzugsweise werden die Ausgangsspannungen aller Stromversorgungsschaltungen überwacht, so daß dann, wenn die Ausgangsspannung einer der Stromversorgungsschaltungen um einen vorbestimmten Betrag oder Prozentsatz sinkt, der betreffende Ausgangsstrom nicht mehr in die Mittelwertsbildung einfließt, um das Ergebnis der Mittelwertsbildung nicht zu verfälschen.

Eine besonders einfache Stromaufteilungs-Regelschaltung besteht aus einer Sternschaltung von Widerständen, wobei in jeden der Widerstände ein Strom gespeist wird, der dem der Ausgangsströme einer der Stromversorgungsschaltungen entspricht. Die über dem jeweiligen Widerstand liegende Spannung kann dann direkt zur Regelung der betreffenden Stromversorgungsschaltung herangezogen werden. Vorzugsweise wird hierbei eine Normierung der stromproportionalen Meßsignale vorgenommen, welche den Ausgangsstrom der jeweiligen Stromversorgungsschaltung repräsentieren. Dies bedeutet, daß ein der Nennlast der jeweiligen Stromversorgungsschaltung entsprechender Ausgangsstrom zu einem Maximal-Meßsignal führt, so daß Stromversorgungsschaltungen verschiedener Nennleistungen parallelschaltbar sind und dann verschieden hohe Ausgangsströme liefern, jedoch, gemessen an ihrer Nennleistung, gleich belastet sind.

Weitere wesentliche Merkmale ergeben sich aus den Unteransprüchen und der nachfolgenden Beschreibung bevorzugter Ausführungsformen der Erfindung, die anhand von Abbildungen näher erläutert werden. Hierbei zeigen:

Fig. 1 ein schematisiertes Blockschaltbild einer ersten Ausführungsform der Erfindung;

Fig. 2 ein schematisiertes Blockschaltbild einer zweiten bevorzugten Ausführungsform der Erfindung;

Fig. 3 ein Blockschaltbild ähnlich dem nach Fig. 2, jedoch mit einer detaillierter erläuterten Mittelwertsbildungsschaltung;

Fig. 4 die Schaltung einer weiteren bevorzugten Ausführungsform der Erfindung; und

Fig. 5 die detaillierte Schaltung einer weiteren bevorzugten Ausführungsform der Erfindung.

In den Abbildungen sind gleiche oder gleichwirkende Schaltungselemente bzw. Baugruppen mit denselben Bezugsziffern versehen.

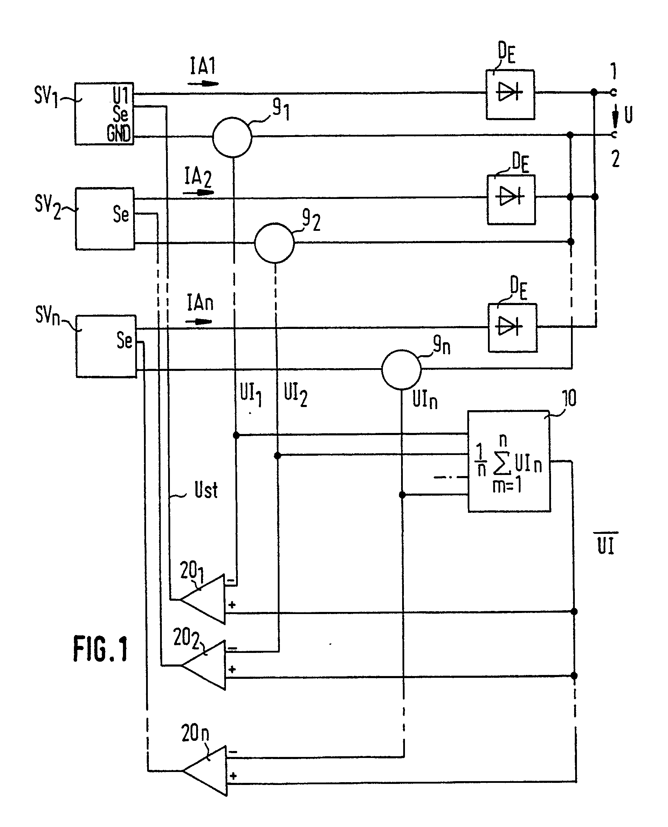

In Fig. 1 ist ein Blockschaltbild einer ersten Ausführungsform der Erfindung gezeigt. Bei dieser sind die Ausgangsklemmen von Stromversorgungsschaltungen SV (1-n), an denen die positive Ausgangsspannung ansteht, über Entkoppelelemente De an eine Ausgangsklemme 1 gelegt. Die Masse-Leitungen der Stromversorgungseinheiten SV (1-n) sind über Meßeinrichtungen 9 an eine zweite Ausgangsklemme 2 geführt. An den Klemmen 1 und 2 steht die Summen-Ausgangsleistung zum Anschluß eines Verbrauchers (nicht gezeigt) zur Verfügung. Fließt ein Strom IA (1-n) aus den jeweiligen Stromversorgungseinheiten SV (1-n), so steht an einer Ausgangsleitung der jeweiligen Meßeinrichtung 9 (1-n) ein Ausgangssignal UI (1-n) an, welches zum einen einem von mehreren Eingängen einer Mittelwertsbildungseinrichtung 10, zum anderen jeweils einem invertierenden Eingang eines Komparators 20 (1-n) zuführbar ist. In der Mittelwertsbildungseinrichtung 10 wird ein Ausgangssignal $\overline{UI}$ gebildet, das dem Mittelwert der Eingangssignale und damit dem Mittelwert der den Stromversorgungsschaltungen SV (1-n) entnommenen Ströme entspricht. Dieses Mittelwertsignal $\overline{UI}$ wird den nicht-invertierenden Eingängen der Komparatoren 20 (1-n) zugeführt.

Die Ausgänge der Komparatoren 20 (1-n) sind auf die Regeleingänge Se der Stromversorgungsschaltungen SV (1-n) geführt. Über diese Regeleingänge Se sind die Ausgangsspannungen UA der jeweiligen Stromversorgungsschaltungen SV (1-n) einstellbar.

Somit wird bei der hier gezeigten Ausführungsform der Erfindung an den Klemmen 1, 2 ein Strom entnommen, der sich aus den Teilströmen IA1-IAn zusammensetzt. In der Mittelwertsbildungseinrichtung 10 wird ein Signal $\overline{UI}$ gebildet, das dem Mittelwert der fließenden Ströme entspricht. Wenn die Lastverteilung gleichmäßig über die angekoppelten Stromversorgungseinheiten SV (1-n) stattfindet, so entsprechen alle Meßsignale UI1-UIn dem Mittelwert $\overline{UI}$ und die an den Ausgängen der Komparatoren 20 (I-n) anstehenden Steuersignale Ust werden zu Null. Dies bedeutet, daß die Ausgangsspannungen der Stromversorgungsschaltungen SV (1-n) weder angehoben noch abagesenkt sondern beibehalten werden. Ist einer der Ausgangsströme, z. B. IA1 kleiner als der Mittelwert $\overline{UI}$ , so geht der Ausgang des Komparators 20 (1) auf hohen Pegel, so daß ein Steuersignal Ust hohen Pegels am Regeleingang Se der entsprechenden Stromversorgungsschaltung SV (1) ansteht. Durch dieses hochpeglige Steuersignal am Regeleingang wird in an sich bekannter Weise die Ausgangsspannung UA dieser Stromversorgungsschaltung SV (1) angehoben und zwar so lange, bis der Ausgangsstrom IA (1) dieser Stromversorgungsschaltung wieder dem Mittelwert der gesamten Ausgangsströme IA (1-n) entspricht. Auf diese Weise wird somit eine gleichmäßige Lastaufteilung erzielt.

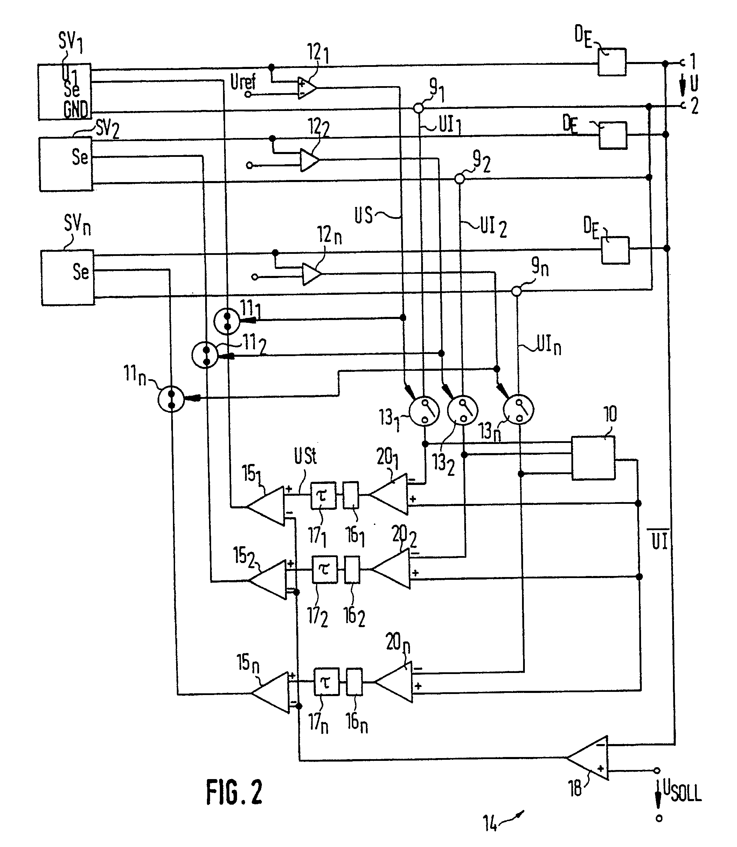

Die in Fig. 2 gezeigte Ausführungsform der Erfindung unterscheidet sich von der nach Fig. 1 zunächst dadurch, daß die Ausgänge der Komparatoren 20 (1-n) jeweils auf einem Eingang einer Schwelleneinrichtung 16 liegen, deren Ausgangssignal sich nur dann ändert, wenn sich das Eingangssignal um einen vorbestimmten Betrag ändert. Das Ausgangssignal der Schwelleneinrichtung 16 ist auf den Eingang einer Tiefpaßeinrichtung 17 geführt, an deren Ausgang das Steuersignal Ust anliegt. Durch diese Schaltungsmaßnahmen wird eine Stabilisierung der Regelung bezüglich der Gleichverteilung von Ausgangsströmen erreicht, da zum einen nur bei definierten, unzulässigen Abweichungen der Stromverteilung eingegriffen wird, zum anderen mit einer relativ niedrigen Geschwindigkeit bzw. mit einer relativ hohen Zeitkonstante geregelt wird.

Weiterhin unterscheidet sich die in Fig. 2 gezeigte Ausführungsform von der nach Fig. 1 dadurch, daß die Ausgangsleitungen der Meßeinrichtungen 9 auf Schalter 13 (1-n) geführt sind, die über Schwellenabtasteinrichtungen 12 (1-n) ansteuerbar sind. Die Schwellenabtasteinrichtungen 12 (1-n) liegen jeweils mit einem Eingang auf der Ausgangsspannung UA einer Stromversorgungsschaltung SV (1-n), der andere Eingang liegt auf einer Bezugsspannung Uref. Unterschreitet die Ausgangsspannung UA einer Stromversorgungsschaltung SV (1-n) die Bezugsspannung Uref, so wird der betreffende Schalter 13 (1-n) geöffnet. Dadurch wird erreicht, daß das betreffende Meßsignal UI (1-n) nicht mehr an die Mittelwertsbildungseinrichtung 10 geführt wird und somit nicht mehr in die Mittelwertsbildung einbezogen wird. Dies ist dann der Fall, wenn die betreffende Stromversorgungsschaltung ausgefallen und ihre Ausgangsspannung UA zusammengebrochen ist. Nach einem solchen Ausfall einer Stromversorgungsschaltung wird somit der Mittelwert $\overline{UI}$ nur noch aus der verbleibenden Anzahl von Ausgangsströmen errechnet.

Die Ausgangssignale der Schwellenabtasteinrichtungen 12 werden weiterhin auf Schalter 11 (1-n) geführt, welche die Regeleingänge Se der Stromversorgungsschaltungen SV (1-n) dann von den übrigen Schaltungsteilen abtrennen können, wenn die entsprechende Stromversorgungsschaltung SV (1-n) ausgefallen und ihre Ausgangsspannung UA zusammengebrochen ist.

Schließlich unterscheidet sich die in Fig. 2 gezeigte Schaltung von der nach Fig. 1 dadurch, daß die Steuersignale Ust jeweils auf einen (nicht-invertierenden) Eingang einer Mischeinrichtung 15 (1-n) geführt sind, deren andere (invertierende) Eingänge über eine gemeinsame Leitung auf den Ausgang eines Regelverstärkers 18 gehen. Der invertierende Eingang des Regelverstärkers 18 liegt auf der Ausgangsklemme 1, an welcher die Summen-Ausgangsspannung ansteht, die dem Verbraucher zugeführt wird. Der nichtinvertierende Eingang des Regelverstärkers 18 liegt auf einer Soll-Spannung USOLL. Wenn bei dieser Anordnung die Ausgangsspannung U an der Klemme 1 niedriger wird als die Soll-Spannung USOLL, so steigt der Ausgangspegel des Regelverstärkers 18.

Demzufolge steigen die Ausgangspegel an den Ausgängen der Mischeinrichtungen 15 (1-n), so daß die Ausgangsspannungen UA aller Stromversorgungsschaltungen SV (1-n) über deren Regeleingänge Se angehoben werden. Auf diese Weise ist eine Konstanthaltung der Summenausgangsspannung U möglich.

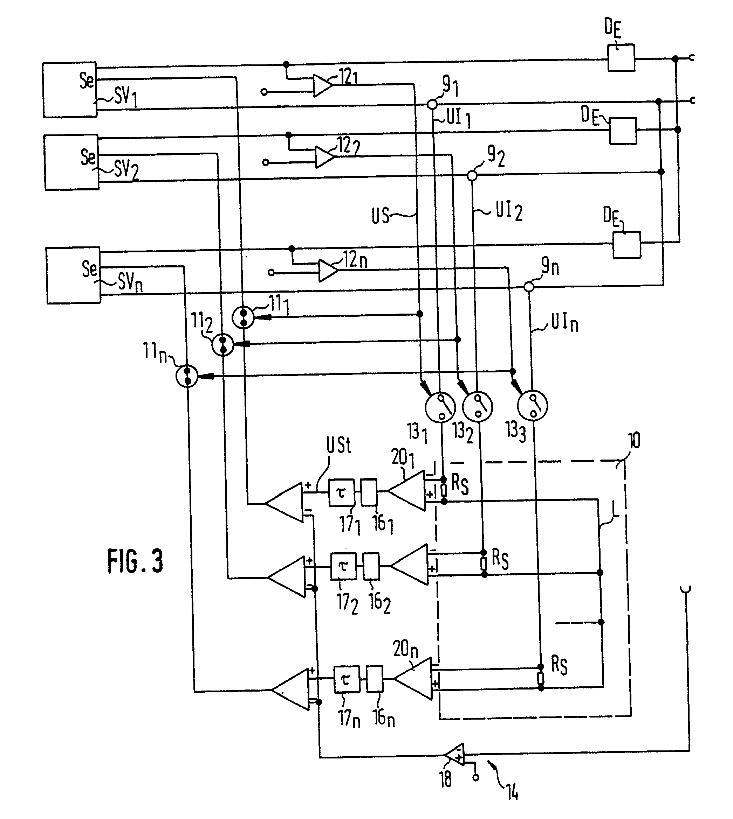

Bei der in Fig. 3 gezeigten Ausführungsform der Erfindung ist eine bevorzugte Ausführungsform der Mittelwertsbildungseinrichtung 10 im Detail gezeigt. Hierbei wird vorausgesetzt, daß die Meßsignale UI (1-n) aus den Meßeinrichtungen 9 (1-n) Spannungen sind, welche den fließenden Strömen proportional sind. Diese Spannungen liegen nun jeweils an ersten Klemmen von Widerständen RS, die mit ihren anderen Klemmen auf einer gemeinsamen Leitung L liegen. Es wird somit eine Sternschaltung von Widerständen RS gebildet. Jeweils ein (nicht-invertierender) Eingang jeder Komparatoreinrichtung 20 (1-n) liegt auf der gemeinsamen Leitung L, die jeweils anderen(invertierenden) Eingänge liegen an der jeweils anderen Klemme der Widerstände RS. Somit tasten die Komparatoreinrichtungen 20 (1-n) die über den Widerständen RS durch die fließenden Ströme abfallenden Spannungen ab. Dann, wenn alle Meßsignale UE (1-n) bzw. alle entsprechenden Spannungen gleich groß sind, fließt durch keinen der Widerstände RS ein Strom. Weicht eine der Meßsignal-Spannungen UE von den übrigen ab, so fließt ein der Abweichung proportionaler Strom, dessen Richtung der Abweichungsrichtung (nach oben oder nach unten) entspricht. Somit steht an dem entsprechenden Widerstand eine Spannung zur Verfügung, die über den jeweiligen Komparator abgegriffen und als Steuerspannung Ust zum Regeln der entsprechenden Stromversorgungsschaltung SV (1-n) weitergegeben wird.

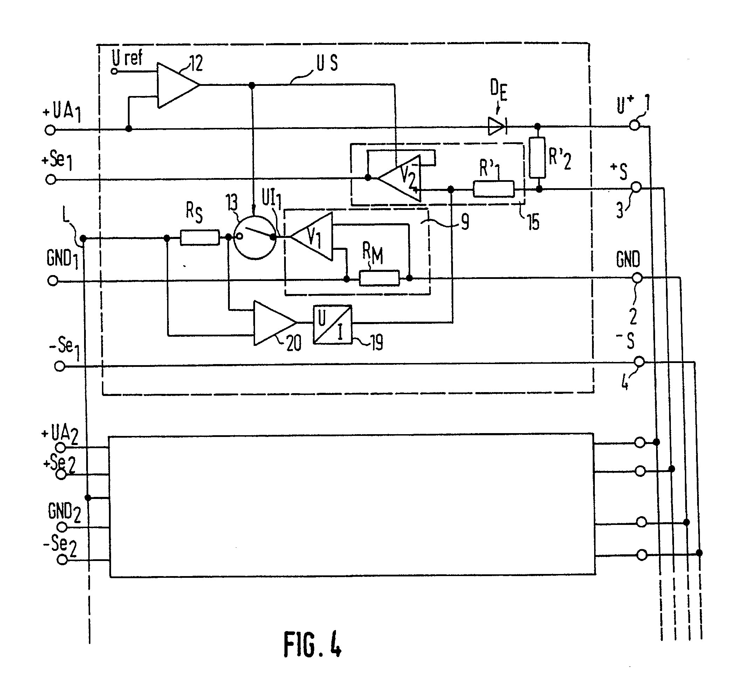

Die in Fig. 4 gezeigte Ausführungsform der Erfindung entspricht im wesentlichen der nach Fig. 1. Bei dieser Ausführungsform wird die Meßeinrichtung 9 durch einen niederohmigen Meßwiderstand RM gebildet, der in der entsprechenden Leitung sitzt. Die über dem Widerstand RM abfallende Spannung wird über einen Differenzverstärker V1 verstärkt, so daß eine entsprechende Ausgangsspannung UI1 am Ausgang des Verstärkers V1 ansteht.

Somit bilden der Meßwiderstand RM und der Verstärker V1 eine mögliche Meßeinrichtung 9 zum Messen des Ausgangsstromes.

Die Mischeinrichtung 15 wird von einem Impedanzwandler V2 gebildet, dessen Eingang einerseits auf dem Ausgang eines Spannungs-/Stromwandlers 19 und andererseits über einen Widerstand R1' auf einer Klemme 3 liegt, die auf dem Ist-Wert der Summen-Ausgangsspannung U gehalten wird, also z. B. mit der Klemme 1 verbunden ist. Der Eingang des Spannungs-/Stromwandlers 9 liegt auf dem Ausgang der Komparatoreinrichtung 20, so daß der vom Wandler 19 gelieferte Strom der Spannung über dem Widerstand RS und damit dem Fehler-Strom proportional ist, um welchen der Ausgangsstrom der betreffenden Stromversorgungsschaltung von den übrigen Ausgangsströmen abweicht. Die Funktionsweise dieser Schaltung ergibt sich für den Fachmann von selbst.

Der in Fig. 4 gezeigte Widerstand R2' ist vorgesehen, um die Klemme 3 auf einem definierten Potential zu halten und dadurch Schäden bei Montagefehlern zu vermeiden.

Der in den Fig. 2 und 3 gezeigte Schalter 11 wird bei der in Fig. 4 gezeigten Schaltung dadurch gebildet, daß die Stromversorgung des Impedanzwandlers V2 über den Ausgang der Schwellenabtasteinrichtung 12 erfolgt. Dann, wenn die Spannung UA der entsprechenden Stromversorgungseinheit die Spannung Uref unterschreitet und der Schalter 13 geöffnet wird, wird gleichzeitig der Impedanzwandler V2 abgeschaltet, so daß der Regeleingang Se der betreffenden Stromversorgungsschaltung gegenüber Rückwirkungen geschützt wird.

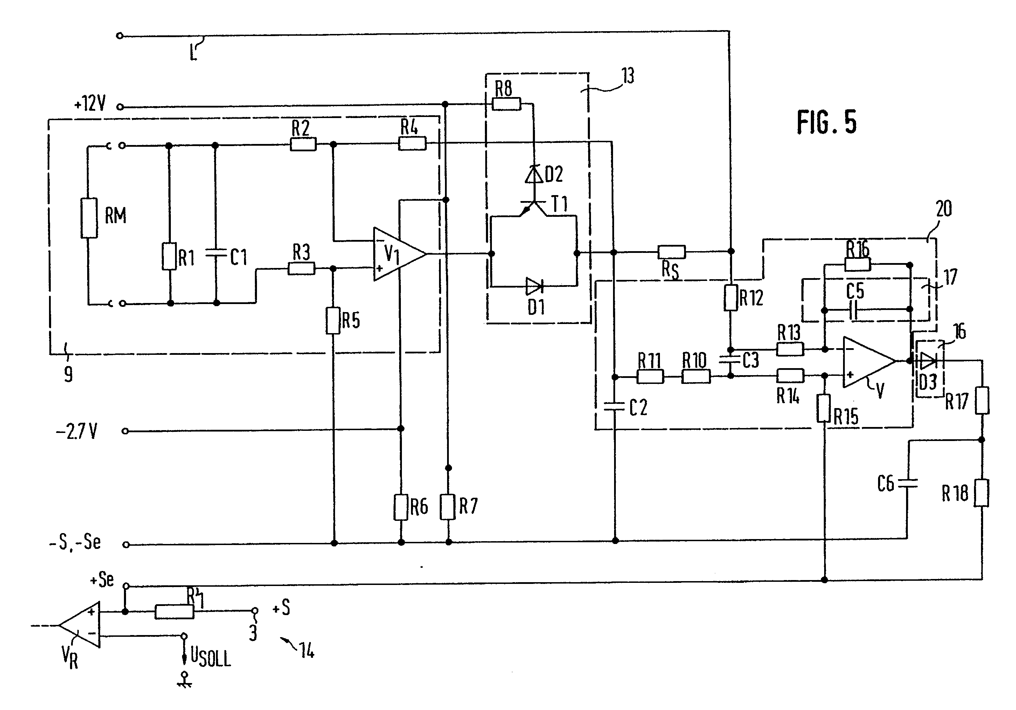

Bei der in Fig. 5 gezeigten Ausführungsform der Erfindung handelt es sich um eine konkrete Schaltung, die zusammen mit von der Anmelderin gefertigten Stromversorgungsschaltungen verwendbar ist. Diese Stromversorgungsschaltungen liefern neben der Ausgangsspannung UA eine Hilfsspannung von +12 V und eine Hilfsspannung von -2,7 V. Die Hilfsspannung von +12 V verhält sich wie die Ausgangsspannung UA, bricht also bei Zusammenbrechen der Ausgangsspannung UA ebenfalls zusammen.

Der in Fig. 4 gezeigte Meßwiderstand RM liegt bei der in Fig. 5 gezeigten Schaltung parallel zu einem ersten (Schutz)-Widerstand R1 und einem ersten (Glättungs-) Kondensator C1. Die eine Klemme des Widerstandes RM ist über einen Widerstand R2 auf einen invertierenden Eingang des Verstärkers V1, die andere Klemme des Widerstandes RM über einen Widerstand R3 auf den nicht-invertierenden Eingang des Verstärkers V1 geführt. Der nicht-invertierende Eingang des Verstärkers V1 liegt über einen Widerstand R5 auf einer Leitung, die den Masse-Anschluß für die Regeleingänge S bzw. Se bildet.

Der Ausgang des Verstärkers V1 ist auf den Emitter eines Transistors T1 geführt, dessen Kollektor über einen Widerstand R4 auf den invertierenden Eingang des Verstärkers V1 geführt ist. Eine Diode D1 liegt mit ihrer Anode auf dem Ausgang des Verstärkers V1 und ihrer Kathode auf dem Kollektor des Transistors T1.

Die Basis des Transistors T1 liegt auf der Anode einer Zenerdiode D2, deren Kathode über einen Widerstand R8 auf die Hilfsspannung +12 V geführt ist. Die Hilfsspannung von +12 V versorgt den Verstärker V1 und ist über einen Widerstand R7 auf die -S, -Se-Leitung geführt. Der Anschluß zur Versorgung des Verstärkers V1 mit negativer Versorgungsspannung liegt auf der Hilfsspannung von -2,7 V und über einen Widerstand R6 auf der -S, -Se-Leitung.

Der Kollektor des Transistors T1 ist über den Widerstand RS auf die Leitung L geführt. Weiterhin liegt der Kollektor des Transistors T1 über einen zweiten Kondensator C2 auf der -S, -Se-Leitung und über eine Reihenschaltung von zwei Widerständen R10, R11 auf einer Klemme eines Kondensators C3, dessen andere Klemme über einen Widerstand R12 auf die Leitung L geführt ist.

Mit seiner einen Klemme ist der Kondensator C3 über einen Widerstand R13 auf den invertierenden Eingang des Verstärkers 20 geführt, der außerdem über eine Parallelschaltung aus einem Kondensator C5 und einem Widerstand R16 gegengekoppelt ist.

Die andere Klemme des Kondensators C13 ist über einen Widerstand R15 auf den nicht-invertierenden Eingang des Verstärkers 20 geführt, der weiterhin über einen Widerstand R15 auf den Regeleingang Se der zugehörigen Stromversorgungsschaltung gelegt ist.

Der Ausgang des Verstärkers 20 liegt auf der Anode einer Diode 3, deren Kathode über eine Reihenschaltung aus zwei Widerständen R17 und R18 auf dem Regeleingang Se der zugehörigen Stromversorgungsschaltung liegt. Der Verbindungspunkt der beiden Widerstände R17 und R18 ist über einen Kondensator C6 auf die -S, -Se-Leitung geführt. Die Diode D3 bildet bei dieser Schaltung die Schwelleneinrichtung 16, der Kondensator C5 den Tiefpaß 17. Der Transistor T1 bildet mit den zugehörigen Bauteilen den Schalter 13.

Der Verstärker V1 verstärkt die am Meßwiderstand RM durch den Ausgangsstrom IA verursachte Spannung derart, daß an seinem Ausgang ein dem Strom IA proportionales Spannungssignal entsteht. Hierbei wird der Verstärkungsfaktor oder der Meßwiderstand RM so eingestellt, daß dann, wenn die zugehörige Stromversorgungsschaltung mit ihrer Nennlast (Nenn-Ausgangsstrom) belastet ist, am Ausgang des Verstärkers V1 eine definierte Spannung, z. B. 2,5 V ansteht. Sobald die Hilfs-Spannung von +12 V zusammenbricht und damit einen Ausfall der zugehörigen Stromversorgungsschaltung anzeigt, sperrt der Transistor T1, so daß die Leitung L hochohmig abgekoppelt wird.

In Fig. 5 ist auch eine Regelschaltung 14 eingezeichnet, die an sich in der zugehörigen Stromversorgungsschaltung angebracht ist. Gemäß der in Fig. 5 gezeigten Darstellung wird der Regeleingang Se der zugehörigen Stromversorgungsschaltung somit von dem nicht-invertierenden Eingang eines Regelverstärkers VR gebildet, der über einen Widerstand R1' auf der Klemme 3 liegt, an welcher der Ist-Wert der Summen-Ausgangsspannung abgegriffen wird, die konstant zu halten ist. Der invertierende Eingang des Regelverstärkers VR wird auf der Soll-Spannung USOLL gehalten. Das Ausgangssignal des Regelverstärkers VR dient in an sich bekannter Weise zur Einstellung der Ausgangsspannung der zugehörigen Stromversorgungsschaltung.

Die übrigen, hier nicht gesonderts in ihrer Funktion beschriebenen Bauteile der Schaltung sind dem Fachmann geläufig. Nur der Vollständigkeit halber sei erwähnt, daß der Widerstand R17 und der Kondensator C6 hochfrequente Regelsignale dämpfen.

**Ansprüche**

1. Parallelschaltmodul, über das mehrere, über Regeleingänge (Se) in ihrer jeweiligen Ausgangsspannung (UA) regelbare Stromversorgungsschaltungen (SV) zur Versorgung eines Verbrauchers mit einer Summenausgangsspannung (U) über Ausgangsklemmen (1, 2) parallelschaltbar sind, mit Entkoppelelementen (DE) zum Entkoppeln des Ausgangs der jeweiligen Stromversorgungsschaltung (SV) vom Verbraucher und den übrigen Stromversorgungsschaltungen, **gekennzeichnet durch** Meßeinrichtungen (9), die derart ausgebildet und mit den Stromversorgungsschaltungen (SV) geschaltet sind, daß den Ausgangsströmen (IA) jeder Stromversorgungsschaltung (SV) entsprechende Meßsignale (UI) erzeugbar sind, eine Mittelwertsbildungseinrichtung (10), der die Meßsignale (UI) zuführbar sind und die ein dem Mittelwert der Meßsignale (UI) proportionales Mittelwertssignal (U̅I̅ ) erzeugt, und mit Komparatoreinrichtungen (20) für jede Stromversorgungsschaltung (SV), die das Mittelwertsignal (U̅I̅ ) mit den jeweiligen Meßsignalen (UI) vergleicht und ein dem jeweiligen Steuereingang (Se) zugeführtes Steuersignal (Ust) derart erzeugen, daß die Ausgangsspannung (UA) der jeweiligen Stromversorgungsschaltung (SV) dann angehoben bzw. abgesenkt wird, wenn der jeweilige Ausgangsstrom (IA) unter bzw. über dem zum Mittelwert der Ausgangsströme proportionalen Wert liegt.

2. Parallelschaltmodul nach Anspruch 1, dadurch gekennzeichnet, daß jede Stromversorgungsschaltung (SV) mit einer Schwellenabtasteinrichtung (12) derart verbunden ist, daß ein Abschaltsignal (US) dann erzeugbar ist, wenn die Ausgangsspannung (UA) der jeweiligen Stromversorgungsschaltung (SV-unter einen vorbestimmten Wert abfällt, und daß erste Abschalteinrichtungen (13) vorgesehen sind, um bei Betätigung das jeweilige Meßsignal (UI) aus der Mittelwertsignalbildung auszuschließen.

3. Parallelschaltmodul nach Anspruch 2,

dadurch gekennzeichnet, daß zweite Abschalteinrichtungen (11) vorgesehen sind, um auf das Abschaltsignal (US) hin den jeweiligen Steuereingang (Se) zu inaktivieren.

4. Parallelschaltmodul nach einem der vorhergehenden Ansprüche, dadurch gekennzeichnet, daß Ausgangsspannungsabtasteinrichtungen (14) vorgesehen sind, um die an den Ausgangsklemmen (1, 2) liegende Summenspannung (U) abzutasten und ein Ausgangsspannungssignal zu erzeugen, das Mischeinrichtungen (15) zuführbar ist, über welche die jeweiligen Steuersignale (Ust) zum Regeln der Summenausgangsspannung (U) auf einen konstanten Wert veränderbar sind.

5. Parallelschaltmodul nach einem der vorhergehenden Ansprüche, dadurch gekennzeichnet, daß die Meßsignale den Ausgangsströmen (IA) proportionale Spannungen (UI) sind, die jeweils ersten Anschlüssen einer Sternschaltung von Widerständen (RS) zuführbar sind, die alle mit ihren anderen Anschlüssen über eine gemeinsame Leitung (L) verbunden sind, so daß über jedem der jeweiligen Widerstände (RS) das zur jeweiligen Stromversorgungsschaltung (SV) gehörige Steuersignal (Ust) abgreifbar ist.

6. Parallelschaltmodul nach Anspruch 4, dadurch gekennzeichnet, daß das Parallelschaltmodul derart aufgebaut ist, daß die Regelung bei Schwankungen der Summenausgangsspannung (U) schneller als bei Abweichung der Ausgangsströme (IA) von deren angestrebten Werten erfolgt.

7. Parallelschaltmodul nach einem der Ansprüche 4 oder 6, gekennzeichnet durch eine Schwelleneinrichtung (16), die derart ausgebildet und angeordnet ist, daß die Ausgangsspannung (UA) der jeweiligen Stromversorgungsschaltung (SV) nur dann angehoben bzw. abgesenkt wird, wenn die Abweichung des jeweiligen Ausgangsstromes (IA) vom angestrebten Wert einen vorbestimmten Mindestbetrag überschreitet.

8. Paralleschaltmodul nach einem der vorhergehenden Ansprüche, dadurch gekennzeichnet, daß die Meßeinrichtungen (9) ein normiertes Meßsignal (UI) erzeugen, so daß ein auf eine Nennlast der jeweiligen Stromversorgungsschaltung (SV) normiertes Meßsignal erzeugt wird, dessen Maximalamplitude bei Belastung der jeweiligen Stromversorgungsschaltung (SV) mit der zugehörigen Nennlast unabhängig vom Betrag des jeweils fließenden Ausgangsstroms (IA) erreicht wird.

9. Parallelschaltmodul nach Anspruch 2, dadurch gekennzeichnet, daß die ersten Abschalteinrichtungen (13) beim Ein- und/oder Ausschalten der Stromversorgungs-

schaltung (SV) betätigbar sind.

FIG.1

FIG. 2

FIG.3

FIG. 4

FIG. 5

EP 0 419 993 A2